# EUROPEAN PATENT APPLICATION

(11) **EP 0 866 399 A2**
(43) Date of publication of application: **23.09.1998**
(21) Application number: 98200521.7
(22) Date of filing: 18.02.1998
(51) Int. Cl.: G06F 3/12

(54) **Storage arbiter for high resolution output systems**

(30) Priority: 12.09.1997 US 928677; 18.03.1997 US 39349 P
(71) Applicant: Bayer Corporation, Pittsburgh, PA 15219-2502 (US)
(72) Inventor: Brady, Thomas P., Methuen, MA 01844 (US); Davison, Paul M., Newburyport, MA 01950 (US)
(74) Representative: Ramon, Charles Lucien

(57) **Abstract**

A storage arbiter (10) for controlling storage device accessacross a network (N1) of raster image processors (14) (RIPs), outputdevices (16) and storage devices (20). The storage arbiter (10) coordinates the read/write requests from the RIPs (14) and outputdevices (16) to the storage devices (20). The storage arbiter (10) assignsa command priority level to each access request, with outputdevices (16) given a higher level than RIPs (14). A request queue ofpending access requests is maintained for each storagedevice (20). As new requests for access to a storage device (20) arereceived, they are added to the request queue for thatstorage device. When a storage device (20) becomes available, the oldest request with the highest priority level in the corresponding request queue is initiated.

## Description

### FIELD OF THE INVENTION

The present invention relates in general to high resolution output systems. More particularly, the present invention is directed to a method and apparatus for providing data buffering between at least one raster image processor (RIP) and at least one output device such as an imagesetter, platemaker, digital proofer, digital color printer, or the like, to maximize the data production and data consumption of each RIP and output device, respectively. Any application involving the production and consumption of large parcels of data may take advantage of the present invention.

### BACKGROUND OF THE INVENTION

As known in the art of electronic prepress systems, output devices such as laser imagesetters require a steady stream of imaging data to operated efficiently. Unfortunately, the RIP(s) which provide the imaging data to an imagesetter generally operate in a bursty manner, commonly leaving the imagesetter starved for imaging data, or the RIP(s) waiting for the imagesetter to use previously supplied imaging data.

Several data buffering systems have been developed to allow an imagesetter and associated RIPs to operated more closely to their maximum data consumption and production rates, respectively. Typically, these data buffering systems use an arrangement of dedicated or shared storage buffers to temporarily store the imaging data rehired by the imagesetter. To operated efficiently, the storage buffers need to have a large storage capacity (multiple gigabytes) and fast storage access rates (megabytes/second).

There are many possible RAID solutions, but these tend to be cost prohibitive in cost/megabyte. A network of SSA disk drives could also be used to provide the needed storage capacity and access rates. Unfortunately, the level of storage device arbitration and command queue control available from SSA drives implementing a SCSI 2 protocol (SSA-S2P) is inadequate for complex applications with real time demands.

### SUMMARY OF THE INVENTION

The present invention provides a storage arbiter for controlling storage device access across a network of RIPs, output devices and storage devices. The storage arbiter coordinates the read/write requests from the RIPs and output devices to the storage devices. This allows the storage devices to be shared by the RIPs and output devices, and accessed in a random, yet predictable, fashion.

The storage arbiter assigns a command priority level to each access request, with output devices given a higher level than RIPs. A request queue of pending access requests is maintained for each storage device. As new requests for access to a storage device are received, they are added to the request queue for that storage device. When a storage device becomes available, the oldest request with the highest priority level in the corresponding request queue is initiated. This allows the output devices, which have real time penalties, to get higher priority when accessing the storage devices.

### BRIEF DESCRIPTION OF THE DRAWINGS

The features of the present invention will best be understood from a detailed description of the invention and preferred embodiments thereof selected for the purposes of illustration and shown in the accompanying drawings in which:
FIG. 1 illustrates a first network, including a single RIP, a single output device, and a storage pool, in which the storage arbiter of the present invention is used to track and coordinate access to the storage devices within the storage pool;
FIG. 2 illustrates a second network comprising two RIPs, a single output device, and a storage pool;
FIG. 3 illustrates a third network comprising a single RIP, a pair of output devices, and a pair of storage pools;
FIG. 4 illustrates a fourth network comprising four RIPs, a pair of output devices, and a pair of storage pools;
FIG. 5 is a flowchart illustrating the input processing logic flow of the present invention;
FIG. 6 is a flowchart illustrating the logic flow of the storage arbiter of the present invention; and
FIG. 7 is a flowchart illustrating the output processing logic flow of the present invention.

### DETAILED DESCRIPTION OF THE INVENTION

The objects, features, and advantages of the present invention are illustrated in detail in the accompanying drawings, wherein like reference numerals refer to like elements throughout the drawings.

The storage arbiter, generally designated as 10, is preferably designed to be used in a network containing at least one RIP, at least one output device (e.g., an imagesetter), and at least one storage pool containing at least one storage device. In the following description, the components that control the data flow and storage/retrieval of data are referred to collectively as the MUX.

The network is used to convey control directives andrequests between the nodes of the network and a MUX controller. Additionally, the network is used to convey output device control, status, and requests between RIPs and output devices, and page pixel data (e.g., image and/or video data) corresponding to a print job from RIP to storage device and from storage device to output device.

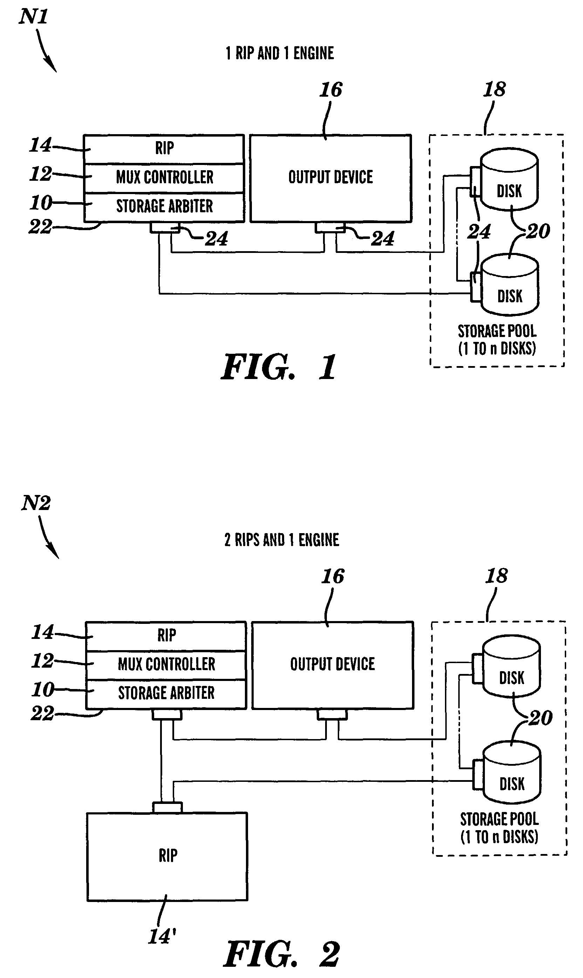

Referring now specifically to FIG. 1, there is illustrated a first network N1 incorporating the storage arbiter 10 of the present invention. The network N1 includes a storage arbiter 10, a MUX controller 12, a single software RIP 14, a single output device 16, and a storage pool 18 containing at least one storage device 20. As shown, the storage arbiter 10, MUX controller 12, and RIP 14 run on a single workstation 22 connected to the network N1. Alternately, the MUX controller 12 can run on a stand-alone workstation attached to the network N1, or can run on a workstation serving as a MUX switching station on the network N1. The RIP 14 may also be a hardware RIP attached to a node of the network N1 separate from the workstation 22.

Suitable network interfaces 24 are used to connect the output device 16, storage devices 20 and workstation 22 (running the storage arbiter 10, MUX controller 12, and RIP 14) in a network configuration. If necessary, depending on hardware requirements and the like, appropriate converters (not shown) may be used to ensure data transfer compatibility between the components of the network. The MUX controller 12 manages the print jobs sent from the RIP 14 to the output device 16.

The MUX controller 12 is also responsible for memory allocation on the storage devices 20, and for associating that storage with a specific print job. The list of storage locations associated with a print job are provided to specific network nodes as needed by the MUX controller 12.

When the RIP 14 is available to start processing a print job for output on the output device 16, it sends the MUX controller a ready status signal. In response, the MUX controller 12 finds and reserves storage in a storage device 20 in the storage pool 18 associated with the output device 16. The RIP 14 is then given permission by the MUX controller 12 to start processing the print job, and the data produced by the RIP 14 is stored on a storage device 20 under control of the storage arbiter 10. When the output device 16 becomes available, the MUX controller 12 sends the data associated with the print job from the storage device 20 to the output device 16.

The RIP 14 and output device 16 may access multiplestorage devices 20 in the storage pool 18. This allows thestorage and retrieval rates of the network N1 to be limitedby the network bandwidth (20-40 MB/s for SSA) rather thanthe lower data transfer rate to a single storage device 20(2-7 MB/s).

When the RIP 14 or the output device 16 needs to accessa storage device 20, it must first request permission fromthe storage arbiter 10. The storage arbiter 10 tracks theavailability of each of the storage devices 20 in thestorage pool 18, and only allows one RIP 14 or one outputdevice 16 to access a particular storage device 20 at atime. The RIP 14 or output device 16 currently given accessto that storage device 16 must report back to the storagearbiter 10 when its read/write operation has been completed.When a particular storage device 20 requested by theRIP 14 or output device 16 is unavailable, the storagearbiter 10 places the access request on a request queue. Itmay be possible for the RIP 14 or output device 16 to havemore than one access request outstanding at a time. Whenthe particular storage device 20 becomes available, thestorage arbiter 10 checks the request queue for any pendingrequests for that storage device 20.

In the present invention, the storage arbiter 10 givesthe output device 16 priority over the RIP 14 when accessingthe same storage device 20. To provide this priority, thestorage arbiter 10 uses a priority scheme when accessing therequest queue. In the event that there are multiplerequests on the request queue, the storage arbiter 10selects the request having the highest priority. In caseswhere multiple requests have the same priority, the first(i.e., oldest) request in the request queue having thatpriority will be selected by the storage arbiter 10.

The storage arbiter 10 of the present invention may beincorporated into a wide variety of network configurations, several examples of which are illustrated in FIGS. 2-5. Ofcourse, many other network configurations are possible.

In FIG. 2, the network N2 includes a storage arbiter10, a MUX controller 12, and a first RIP 14 running on aworkstation 22. The network N2 further includes a secondRIP 14' (software or hardware), a single output device 16,and a storage pool 18 containing at least one storage device20. The storage arbiter 10 and MUX controller 12 coordinatethe access requests from the RIPs 14, 14' and the outputdevice 16, and the resultant data transfers from the RIPs14, 14' to the storage devices 20 in the storage pool 18,and from the storage devices 20 to the output device 16.

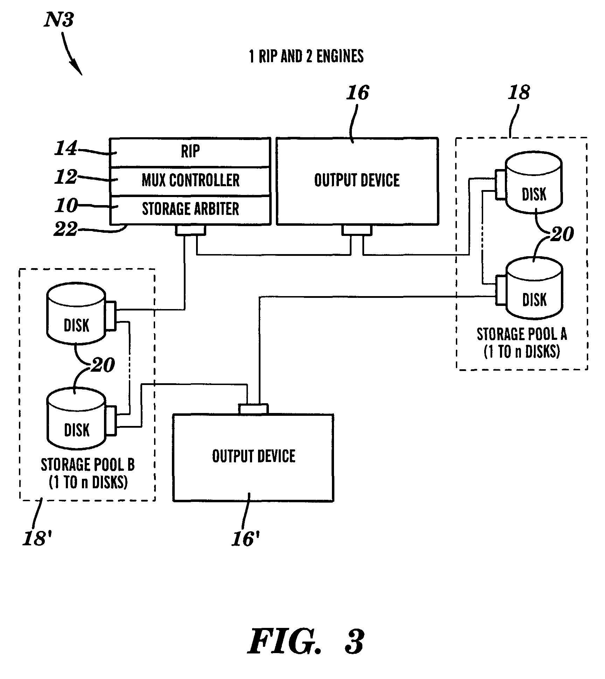

A network N3 including a single RIP 14 and a pair ofoutput devices 16, 16', is illustrated in FIG. 3. In thisnetwork each output device 16, 16' is associated with acorresponding storage pool 18, 18', respectively, eachcontaining at least one storage device 20. The storagearbiter 10 and MUX controller 12 coordinate the accessrequests from the RIP 14 and the output devices 16, 16', andthe resultant data transfers between the RIP 14, the storagedevices 20 in the storage pools 18, 18', and the outputdevices 16, 16'.

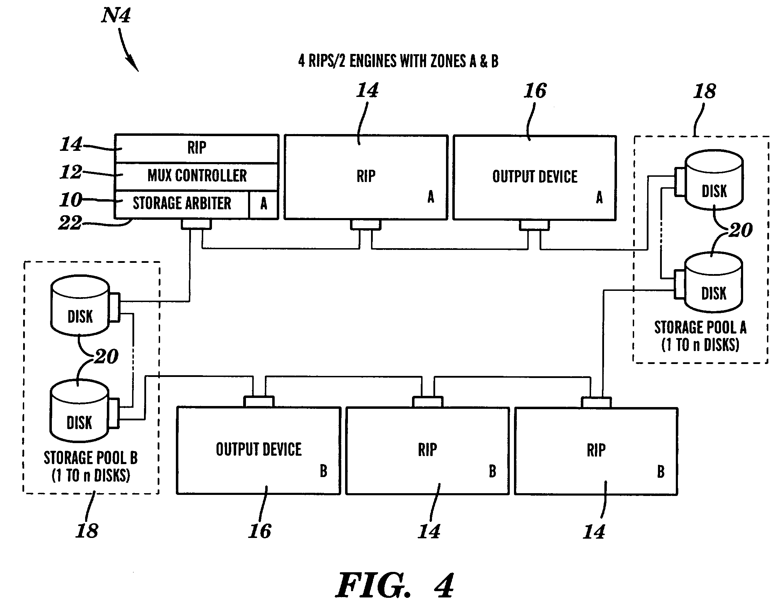

A final example of a network N4 is provided in FIG. 4. In this network there are two zones A, B, each including apair of RIPs 14, a single output device 18, and a storagepool 18 comprising at least one storage device 20.

The present invention provides a method and apparatusfor maximizing the utilization of RIPs and output devices,wherein the RIPs and output devices are busy producing andconsuming data, respectively, at high rates of speed. EachRIP stores the data it produces in a storage pool associatedwith a particular output device. The output deviceretrieves that data from the storage pool during the dataconsumption process. In the case where the output device isan imagesetter, for example, each RIP generates pixel imagedata based on input page descriptions. The imagesetterconsumes the data by imaging the pixel image data ontooutput media such as film or a printing plate.

Each storage pool typically includes a plurality ofstorage devices. The minimum number of storage devices is afunction of the data consumption rate and the effectiveread/write data rate of each output device. Additionalstorage devices can be added to a storage pool to supportmore RIPs and/or provide longer term storage for the outputdata.

To keep an output device running at full speed, theminimum number of storage devices is equal to the outputdevice data rate divided by the transfer rate of eachstorage device (assuming identical storage devices). Tokeep an output device running at full speed and to allowtime for the RIPs to replenish the supply of image data, theminimum number of storage devices is equal to two times theoutput device data rate divided by the transfer rate of eachstorage device. Of course, the minimum number of storagedevices may be reduced by using a suitable data compressiontechnique.

During operation of the output system, the outputdevice(s) and RIP(s) compete for read/write access of thestorage devices. The storage arbiter 10 of the presentinvention regulates access to the storage devices. Adescription of the input processing, storage arbiterprocessing, and output processing provided by the presentinvention is described below. For simplicity, theprocessing flow of the present invention is described withregard to the network N1 illustrated in FIG. 1, wherein thestorage pool 18 contains a single storage device 20. However, it should be readily apparent that the processingflow described hereinbelow may be applied to any of thenetworks N2, N3, N4, as well as other suitable networks,without departing from the scope of the present invention.

### Input Processing

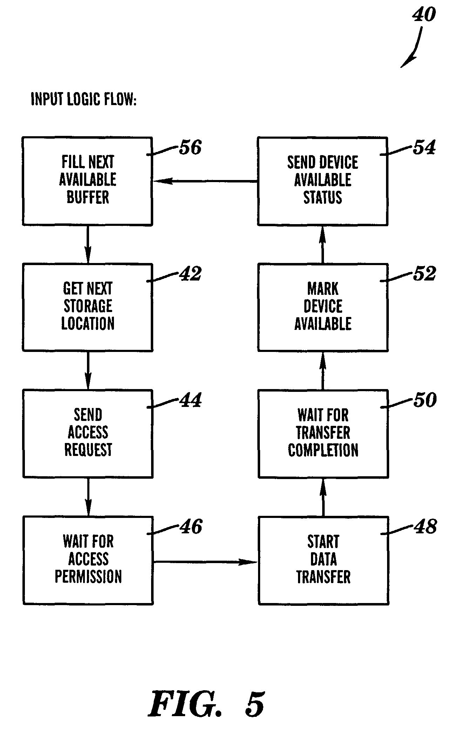

To begin processing a print job, a PC, MAC orworkstation (not shown) sends data in a page descriptionformat to a RIP 14. The RIP 14 notifies the MUX controller12 of the existence of new print job (page dimensions andoutput resolution included). The MUX controller 12determines the approximate amount of storage needed for theprint job and reserves that storage in a storage device 20in the storage pool 18. The MUX controller 12 sends the RIP14 instructions to begin processing the print job, andprovides the RIP 14 with the storage locations in thestorage device 20 where the image data for the print job isto be stored. A flowchart 40 illustrating the inputprocessing logic flow is provided in FIG. 5.

When a RIP 14 has a block of data to store, itconsults 42 the list of storage locations provided by theMUX controller 12, requests access 44 to the appropriatestorage device 20 from the storage arbiter 10, and awaitsaccess permission 46. The storage arbiter 10 receives therequest and places the request on a request queue for thatstorage device 20. When the storage device 20 becomesavailable, the RIP 14 is sent permission by the storagearbiter 10 to access the storage device 20. The storagedevice 20 is now considered to be unavailable to all otherdevices (e.g., RIPs, output devices).

When the RIP 14 receives access permission, it beginswriting 48 the data to the specified locations in thestorage device 20 previously allocated by the MUX controller12. Upon completion 50 of the data storage, the RIP 14notifies the storage arbiter 10 that it has finished thewriting operation, thereby alerting 52, 54 the storagearbiter 10 that the storage device 20 is again available toother devices (RIPs and output devices) in the network. Thestorage arbiter 10 subsequently purges the access requestfor the just completed data storage from the request queuefor storage device 20.

Should the storage allocated to the print job beinadequate, the RIP 14 requests additional storage by theMUX Controller 12. The RIP 14 then continues to produce andstore the data in the additional storage location(s) in thestorage device 20 specified by the MUX controller 12. Whenthe print job has been completely stored in the storagedevice 20, the RIP 14 notifies the MUX controller 12 thatthe entire print job has been stored and how much storagewas required. The MUX controller 12 frees any extra storagereserved for the print job and places the print job on thejob list for the output device 16. The storage arbiter 10subsequently marks the storage device 20 as available, andthe next access request on the access queue is granted.

In the simple network N1 of FIG. 1, the next accessrequest is most likely a (higher priority) read operation bythe output device 16, where the data from the just processedprint job is read out of the storage device 20 and processedby the output device 16. In more complex networks includinga plurality of RIPs, output devices, and storage devices, the next access request that is granted for read/writeaccess to a particular storage device is dependent upon thepriority of the access request in the request queue for thatstorage device. As described above, the storage arbiter 10uses a priority scheme when accessing the request queue foreach storage device 20, wherein the highest (or oldesthighest) request on the request queue for each storagedevice 20 is selected by the storage arbiter 10.

### Storage Arbiter Processing

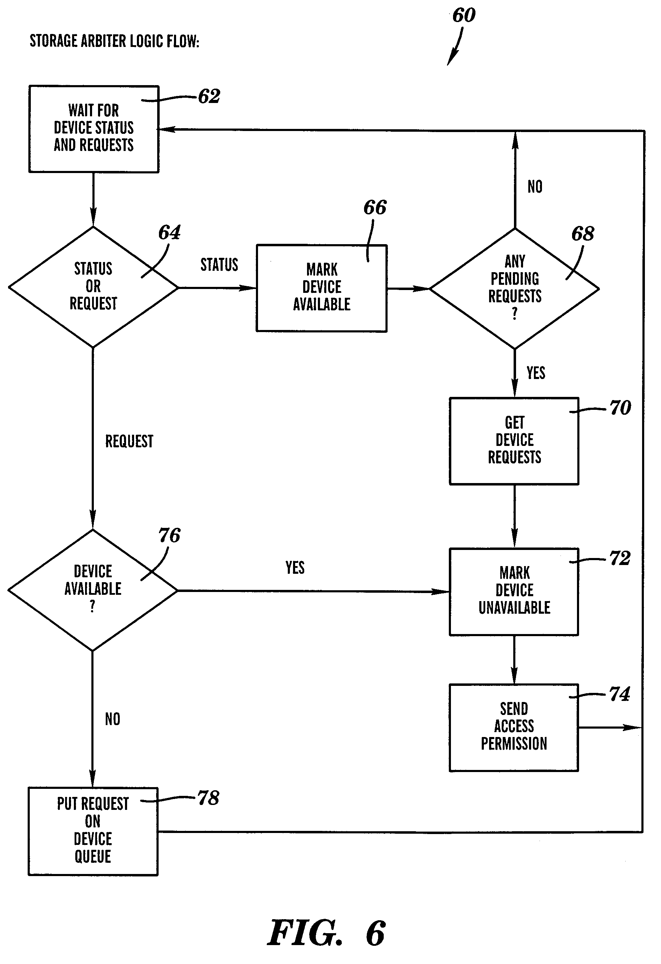

A flowchart 60 of the logic flow of the storage arbiter10 is illustrated in FIG. 6. The storage arbiter 10 isresponsible for tracking the availability of each storagedevice 20 in the network. It is typically inactive, waiting62 for an access request or a storage device availablestatus message. The storage arbiter 10 parses 64 anincoming access request or a storage device available statusmessage and performs different operations in response to theparsing result.

In response to a storage device available statusmessage, the storage arbiter 10 marks 66 the storage device20 as available, and checks 68 the request queue for anypending requests for access to the storage device 20. Ifthere are no pending requests, the storage arbiter awaits 62another access request or a storage device available statusmessage. If there are pending requests on the request queuefor the storage device 20, the storage arbiter 10 fetches 70the highest priority request in the request queue, marks 72the storage device 20 as unavailable, and sends 74 an accesspermission message to the originator of the access request. The storage arbiter 10 then awaits 62 another access requestor a storage device available status message.

Upon receipt of a new access request, the storagearbiter 10 initially processes the access request bychecking 76 the availability of the requested storage device20. If the storage device 20 is available, the storagearbiter 10 marks 72 the storage device 20 as unavailable, and sends 74 an access permission message to the originatorof the access request. If the requested storage device 20is unavailable, the access request will be placed 78 on arequest queue associated with the storage device 20. Thestorage arbiter 10 then awaits 62 another access request ora storage device available status message.

### Output Processing

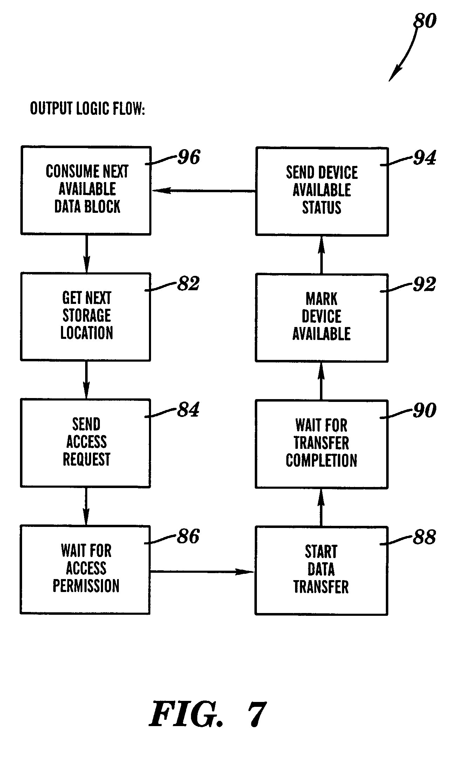

A flowchart 80 illustrating the output processing logicflow is provided in FIG. 7. When an output device 16 isavailable and there are print jobs for it to run, the MUXcontroller 12 starts a new print job at the output device16. The MUX controller 12 sends the list of storagelocations in the storage device 20 that hold the image datacorresponding to the print job to the output device 16.

When the output device 16 requires a block of data forthe print job, it attempts to access 82 a storage locationin the list of storage locations corresponding to that printjob by sending 84 an access request to the storage arbiter10. The storage arbiter 10 receives the access request and places it on the request queue for that storage device 20. The output device 16 remains idle until it receives 86 permission from the storage arbiter 10 to access the storagedevice 20. When the storage device 20 becomes available, the storage arbiter 10 sends access permission to the outputdevice 16. At this point, the storage device 20 isunavailable to all other devices (e.g., RIPs, outputdevices) on the network.

After receiving access permission from the storagearbiter 10, the output device 16 reads 88 a data block fromthe storage device 20. When the data block has beencompletely read 90, the output device 16 notifies 92, 94 thestorage arbiter 10 that the transfer has been completed, andthat the storage device 20 is once again available. Whenthe output device 16 finishes outputting the data block, itis ready to access 96 the next data block in the print job.

When the output device 16 completes the print job, itnotifies the MUX controller 12 that the print job has beenprocessed. The output device 16 is now considered to beavailable, and any storage locations in the storage device20 associated with the finished print job can be reused tostore data corresponding to new print jobs from the RIPs.

The foregoing description of the present invention hasbeen presented for purposes of illustration and description. It is not intended to be exhaustive or to limit theinvention to the precise form disclosed, and manymodifications and variations are possible in light of theabove teaching. Such modifications and variations that maybe apparent to a person skilled in the art are intended tobe included within the scope of this invention as defined bythe accompanying claims.

## Claims

1. A method for providing data buffering between atleast one raster image processor (RIP) (14), a storage pool (18) including at least one storage device (20), and at least oneoutput device (16), comprising the steps of:
receiving an access request from one of said RIPs (14) orone of said output devices (16) to access one of the storagedevices (20) in said storage pool (18);
storing each access request (78) for a specific storagedevice (20) in a request queue for that storage device;
assigning a first command priority level to said accessrequest if said access request is received from one of saidRIPs (14);
assigning a second, higher priority level to saidaccess request if said access request is received from oneof said output devices (16);
determining (76) if any of said storage devices (20) becomesavailable; and
if a storage device (20) is available, granting the oldestaccess request with the highest command priority level inthe request queue for the available storage device, therebyallowing the RIP (14) or output device (16) having the oldest, highestpriority access request to access the available storagedevice.

2. The method according to claim 1, further including the input processing steps of:
sending a print job to one of said RIPs (14) (RIP A);
determining a storage requirement for datacorresponding to said print job;reserving storage in at least one of said storagedevices (20) (STORAGE A) for said print job data;
providing RIP A (14) with storage locations in STORAGE A (20) forthe storage of said print job data; and
instructing RIP A (14) to begin processing said print job toproduce said print job data.

3. The method according to claim 2, wherein said inputprocessing steps further include the steps of:
determining when RIP A (14) has at least a portion of saidprint job data available for storage;
outputting an access request for permission to accessSTORAGE A (20) for the storage of the print job data produced byRIP A (14);
storing the access request for STORAGE A (20) on the requestqueue for STORAGE A.

4. The method according to claim 3, wherein said inputprocessing steps further include the steps of:
determining when STORAGE A (20) becomes available;
if STORAGE A (20) is available, determining the commandpriority level of the access request for permission toaccess STORAGE A for the storage of the print job dataproduced by RIP A (14); and
if STORAGE A (20) is not available, denying access for RIP A(14) to store said print job data on STORAGE A.

5. The method according to claim 4, wherein said inputprocessing steps further include the steps of:
allowing RIP A (14) to store said print job data on STORAGEA (20) if STORAGE A is available and if the access request forpermission to access STORAGE A for the storage of the printjob data produced by RIP A is the oldest access request withthe highest command priority level in the request queue forSTORAGE A; and
denying access for RIP A (14) to store said print job dataon STORAGE A (20) if the access request for permission to accessSTORAGE A for the storage of the print job data produced byRIP A is not the oldest access request with the highestcommand priority level in the request queue for STORAGE A.

6. The method according to claim 5, wherein said inputprocessing steps further include the steps of:
marking STORAGE A (20) as unavailable during the storage ofsaid print job data therein; and
marking STORAGE A as available (52) upon completion of thestorage of said print job data.

7. The method according to claim 1, further including the output processing steps of:
initiating a print job on one of said output devices (16) (DEVICE A);
determining storage locations in at least one of saidstorage devices (20) (STORAGE A) containing print job datacorresponding to said print job;
providing DEVICE A (16) with storage locations in STORAGE A(20) containing said print job data; and
instructing DEVICE A (16) to begin outputting said printjob.

8. The method according to claim 7, wherein said outputprocessing steps further include the steps of:
outputting an access request (84) for permission to accessthe print job data stored on STORAGE A (20).
storing the access request for STORAGE A (20) on the requestqueue for STORAGE A.

9. The method according to claim 8, wherein said outputprocessing steps further include the steps of:
determining when STORAGE A (20) becomes available;
if STORAGE A (20) is available, determining the commandpriority level of the access request for permission toaccess the print job data stored on STORAGE A; and
if STORAGE A (20) is not available, denying DEVICE A (16) accessto STORAGE A.

10. The method according to claim 9, wherein said outputprocessing steps further include the steps of:
allowing DEVICE A (16) to access the print job data storedon STORAGE A (20) if STORAGE A is available and if the accessrequest by DEVICE A for permission to access the print jobdata on STORAGE A is the oldest access request with thehighest command priority level in the request queue forSTORAGE A; and
denying DEVICE A (16) access to STORAGE A (20) if the accessrequest for permission to access the print job data onSTORAGE A is not the oldest access request with the highestcommand priority level in the request queue for STORAGE A.

11. The method according to claim 10, wherein said outputprocessing steps further include the steps of:
marking STORAGE A (20) as unavailable while DEVICE A (16) isaccessing the print job data stored therein; and
marking STORAGE A (20) as available (92) upon completion of theaccessing of said print job data.
